# EUROPEAN PATENT SPECIFICATION

(11) **EP 1 279 432 B1**
(45) Date of publication and mention of the grant of the patent: **22.02.2012**
(21) Application number: 02016502.3
(22) Date of filing: 23.07.2002
(51) Int. Cl.: B01D 53/94, B01D 53/32

(54) **Chemical reactor**
Chemischer Reaktor
Reacteur chimique

(30) Priority: 24.07.2001 JP 2001223687
(43) Date of publication of application: 29.01.2003
(73) Proprietor: National Institute of Advanced Industrial Science and Technology, Tokyo 100-8921 (JP); NGK Insulators, Ltd., Nagoya-shi, Aichi 467-8530 (JP)
(72) Inventor: Awano, Masanobu, Aist Chubu, Nagoya-shi, Aichi 463-8569 (JP); Fujishiro, Yoshinobu, Aist Chubu, Nagoya-shi, Aichi 463-8569 (JP); Hwang, Hae Jin, Aist Chubu, Nagoya-shi, Aichi 463-8569 (JP); Bredikhin, Sergei, Synergy Ceramics Laboratory, Nagoya-shi, Aichi 463-8687 (JP); Matsuda, Kazuyuki, Synergy Ceramics Laboratory, Nagoya-shi, Aichi 463-8687 (JP); Maeda, Kunihiro, Synergy Ceramics Laboratory, Nagoya-shi, Aichi 463-8687 (JP); Kanai, Takao, Synergy Ceramics Laboratory, Nagoya-shi, Aichi 463-8687 (JP); Miyata, Motoyuki, Synergy Ceramics Laboratory, Nagoya-shi, Aichi 463-8687 (JP)
(74) Representative: Ebner von Eschenbach, Jennifer

(56) References cited:
- EP-A- 0 480 116
- EP-A- 0 566 071
- US-A- 5 401 372
- PATENT ABSTRACTS OF JAPAN vol. 1996, no. 02, 29 February 1996 (1996-02-29) & JP 07 275714 A (TORAY IND INC), 24 October 1995 (1995-10-24)
- PATENT ABSTRACTS OF JAPAN vol. 1996, no. 11, 29 November 1996 (1996-11-29) & JP 08 168673 A (AGENCY OF IND SCIENCE &TECHNOL), 2 July 1996 (1996-07-02)
- PATENT ABSTRACTS OF JAPAN vol. 1997, no. 07, 31 July 1997 (1997-07-31) & JP 09 087880 A (MATSUSHITA ELECTRIC IND CO LTD;CHIKYU KANKYO SANGYO GIJUTSU KENKYU KIK), 31 March 1997 (1997-03-31)

## Description

### BACKGROUND OF THE INVENTION

### 1. Field of the Invention

The present invention relates to a chemical reactor (electrochemical cell) for carrying out chemical reactions of substances involving nitrogen oxides and other substances to be treated, and more particularly to a chemical reactor that allows, for example, nitrogen oxides to be decomposed and removed from oxygen-containing combustion exhaust gases with high efficiency and low power consumption even in the presence of excess oxygen, which impedes chemical reactions of substances to be treated.

### 2. Description of the Related Art

A method using three-way catalyst systems is primarily used for decomposing and removing the nitrogen oxides generated by gasoline engines. However, in lean-burning engines and diesel engines, with which increased mileage is possible, there is the problem of a sharp drop in the catalytic action due to the adsorption of oxygen on the surface of the three-way catalyst systems because of the presence of excess oxygen in the combustion exhaust gas, making it impossible to effectively remove nitrogen oxides.

On the other hand, by using a solid electrolyte film having oxygen ion conductivity through which a current is passed, the oxygen in the exhaust gas can be eliminated without being adsorbed on the catalyst surface. In addition, it has been reported that a system in which nitrogen oxides are broken down into oxygen and nitrogen simultaneously with the elimination of surface oxygen by the application of a voltage to a solid electrolyte sandwiched between electrodes has been proposed for a catalytic reactor.

References related to the aforementioned prior art are listed below.

*J. Electrochemical Soc.,* 122, 869 (1975). This reference presents a system where platinum electrodes are formed on both sides of zirconia stabilized with scandium oxide, and nitrogen oxides are broken down into nitrogen and oxygen by the application of a voltage.

*J. Chem. Soc. Faraday Trans.,* 91, 1995 (1995). This reference presents a system in which palladium electrodes are formed on both sides of yttria-stabilized zirconia, and the nitrogen oxides in a mixed gas of nitrogen oxides, hydrocarbons, and oxygen are broken down into nitrogen and oxygen by the application of a voltage.

However, in the aforementioned conventional methods, when excess oxygen is present in the combustion exhaust gas, the coexisting oxygen ionizes and flows through the solid electrolyte, so a large amount of current is required to flow in order to break down the nitrogen oxides. As a result, there is the problem that the power consumption increases, and the development of a new technology without the aforementioned problem has been ardently sought in this field of technology.

With the foregoing in view and in order to solve the aforementioned problems, the present inventors embarked on research into the technological task of developing technology to reduce the amount of ionized oxygen that flows in the solid electrolyte when excess oxygen is present in a combustion exhaust gas, and hence developing a chemical reactor (electrochemical cell) in which the amount of current required for decomposition of the nitrogen oxides can be reduced and nitrogen oxides can be decomposed and removed with low power consumption and a high degree of efficiency.

US-A-5 401 372 describes an electrochemical cell for NOₓ removal including a solid oxide electrolyte with porous, catalytically-active electrodes at opposite sides of the electrolyte.

EP-A-0 566 071 describes a method for reducing nitrogen oxides from exhaust gases which are discharged from internal combustion engines, burners, nitric acid production plants, etc. A direct current (DC) voltage is applied between an anodic portion containing an oxidizing catalyst provided on one surface of a proton-conductive solid electrolyte (which separates the flow path of the gas to be treated into two parts) to face one flow path, and a cathodic portion containing a reducing catalyst provided on the other surface of the proton-conductive solid electrolyte to face the other flow path, so as to electrolytically oxidize the water vapour on the anodic portion in one of the flow paths; and transporting the thus produced protons to the cathodic portion through the solid electrolyte based on the potential gradient, thereby reducing the nitrogen oxides within the other flow path by taking advantage of the reducing power of hydrogen brought to the cathodic portion.

JP-A-07275714 (Patent Abstract of Japan) describes a NOₓ removing device composed of an electrically conductive catalyst which is associated with a cathode, a solid electrolyte and an anode.

JP-A-08168673 (Patent Abstract of Japan) describes a new exhaust gas treatment process and a device therefor with a cathode containing a catalyst layer formed on a first surface of an oxygen ion conductive solid electrolyte, and an anode composed of conductive layers formed on a second surface of the solid electrolyte.

EP-A-0 480 116 describes a method and apparatus for carrying out catalytic reactions which is characterized by the use of a conductive catalyst film (metal or metal oxide) in contact with a solid electrolyte and application of electrical potential or current between the catalyst and a counter electrode.

JP-A-09087880 (Patent Abstract of Japan) describes an electrochemical element for decomposing NOₓ into N₂ and O₂ which consists of an electrolyte, an anode and a cathode arranged on the opposed faces of the electrolyte, and a porous catalyst bed formed between the electrolyte and the cathode.

### SUMMARY OF THE INVENTION

The present invention provides a chemical reactor for carrying out chemical reactions of substances to be treated, as recited in claim 1 hereof.

Specifically, as a result of repeated and painstaking research aimed at developing a new chemical reactor (electrochemical cell) in which nitrogen oxides can be decomposed and removed with high efficiency and low power consumption, the inventors perfected the present invention upon discovering that the substances to be treated can be treated with high efficiency and lower power consumption by employing a catalytic reaction to reduce the content of excess oxygen as harmful gas when the catalytic reaction section of the chemical reactor is disposed in the upstream portion of the chemical reaction section with respect to the flow of the gas to be treated, and the substances to be treated are caused to undergo a chemical reaction.

The present invention comprises the following technological means aimed at resolving the aforementioned issues.
(1) A chemical reactor for carrying out chemical reactions of substances to be treated in the presence of excess oxygen, comprising a chemical reaction section in which the chemical reactions of the substances to be treated proceed, and a catalytic reaction section in which the oxygen concentration is reduced; and having a structure in which the catalytic reaction section is disposed in the upstream portion of the chemical reaction section, wherein the catalytic reaction is utilized to reduce the content of excess oxygen during the chemical reactions.
(2) The chemical reactor according to the said (1), wherein the catalytic reaction section comprises an oxidation catalyst.
(3) The chemical reactor according to the said (1), wherein the chemical reaction section comprises a reduction phase for supplying electrons to the elements contained in the substances to be treated to generate ions; an ion-conducting phase for conducting the ions from the reduction phase; and an oxidation phase for releasing the electrons from the ions conducted by the ion-conducting phase.
(4) The chemical reactor according to the said (3), wherein the catalytic reaction section covers the surface of the reduction phase.
(5) The chemical reactor according to the said (4), wherein a porous oxidation catalyst film covers the surface of the reduction phase.
(6) The chemical reactor according to the said (4), wherein an electric insulating layer is disposed between the catalytic reaction section and the reduction phase.
(7) The chemical reactor according to the said (3), wherein the substances to be treated are nitrogen oxides, the nitrogen oxides are reduced in the reduction phase to generate oxygen ions, and the oxygen ions are conducted by the ion-conducting phase.
(8) The chemical reactor according to the said (1), wherein the oxygen concentration is reduced by means of a catalytic combustion reaction between the oxygen and a combustible gas in the catalytic reaction section.

### BRIEF DESCRIPTION OF THE DRAWINGS

Fig. 1 is a structural drawing of the chemical reactor related to an example of the present invention;
Fig. 2 is a cross-sectional view of one illustration of the chemical reactor shown in Fig. 1;
Fig. 3 is a cross-sectional view of the chemical reactor related to an example of the present invention; and
Fig. 4 is a cross-sectional view of the chemical reactor related to another example of the present invention.

### DESCRIPTION OF THE PREFERRED EMBODIMENTS

Next, a more detailed explanation will be given regarding the present invention.

The present invention is a chemical reactor (electrochemical cell) for carrying out chemical reactions such as decomposing and removing nitrogen oxides and other substances to be treated, comprising a chemical reaction section in which the chemical reactions of the substances to be treated proceed, and a catalytic reaction section (in other words, an oxygen partial pressure decreasing layer) whose function is to reduce the concentration of oxygen, which is an impediment to the chemical reactions, wherein the catalytic reaction section is disposed in the upstream portion of the chemical reaction section.

The chemical reaction section for performing the chemical reaction of substances to be treated should preferably comprise a reduction phase for supplying electrons to the elements contained in the substances to be treated to generate ions; an ion-conducting phase for conducting the ions from the reduction phase; and an oxidation phase for releasing the electrons from the ions conducted by the ion-conducting phase.

The nitrogen oxides contained in a combustion exhaust gas can be given as an example of such substances to be treated, and, in this case, the nitrogen oxides are reduced in the aforementioned reduction phase of the chemical reactor to generate oxygen ions, the oxygen ions are conducted by the ion-conducting phase, and the electrons are released from the ions in the oxidation phase. The substances to be treated of the present invention are not limited to nitrogen oxides and, as long as the substance is a gas that contains oxygen atoms, the same kind of treatment is possible. Carbon dioxide, methane, water (water vapor) and the like can be given as examples. In these cases, for example, the carbon dioxide can be reduced to generate carbon monoxide, a mixed gas of hydrogen and carbon monoxide can be generated from the methane, or hydrogen can be generated from the water by the chemical reactor of the present invention.

Tubular, flat, and honeycombed configurations can be cited as preferred examples of the shapes selected for the chemical reactor of the present invention. Particularly preferred among these are configurations in which a single continuous hole or a plurality of continuous holes having a pair of openings are provided, and a chemical reaction section is placed in each continuous hole, such as in the case of tubular and honeycombed configurations.

A porous phase capable of selectively adsorbing the substance to be subjected to a chemical reaction is preferred for the reduction phase of the chemical reaction section. The reduction phase should preferably comprise an electroconductive substance in order to supply electrons to the elements contained in the substances to be treated, to generate ions, and to transfer the generated ions to the ion-conducting phase. In addition, to promote the transfer of electrons and ions, it is preferable that the reduction phase comprise a mixed-conductivity substance having both the properties of electron conductivity and ion conductivity, or comprise a mixture of an electron-conducting substance and an ion-conducting substance. The reduction phase may also comprise a structure having as many as two or more layered phases of these substances.

The electroconductive substances and ion-conducting substances used for the aforementioned reduction phase are not particularly restricted. Examples of such electroconductive substances include precious metals such as platinum, palladium and the like, and metal oxides such as nickel oxide, cobalt oxide, copper oxide, lanthanum manganite, lanthanum cobaltite, lanthanum chromite, and the like. Barium-containing oxides, zeolite, and other materials capable of selectively adsorbing substances to be treated can also be used for the reduction phase.
Furthermore, the use of a mixture of at least one type of the aforementioned substances and at least one type of ion-conducting substance is preferable. Zirconia stabilized with yttria or scandium oxide, ceria stabilized with gadolinium oxide or samarium oxide, lanthanum gallate, or the like can be used for the ion-conducting substance. It is also preferable that the reduction phase comprise a structure having at least two layered phases of the aforementioned substances. It is even more preferable that the reduction phase comprise a two-phase layered structure having a electroconductive substance phase comprising a precious metal such as platinum, and a mixture phase of nickel oxide and zirconia stabilized with yttria or scandium oxide.

The ion-conducting phase should comprise an ion-conducting solid electrolyte, and preferably a solid electrolyte capable of conducting oxygen ions. zirconia stabilized with yttria or scandium oxide, ceria stabilized with gadolinium oxide or samarium oxide, and lanthanum gallate can be given as examples of solid electrolytes capable of conducting oxygen ions, but no particular restrictions are imposed. Zirconia stabilized with yttria or scandium oxide, which possess high conductivity, strength, and superior long-term stability, should preferably be employed for the ion-conducting phase.

The oxidation phase contains an electroconductive substance in order to release the electrons from the ions in the ion-conducting phase. In order to promote the transfer of electrons and ions, it is preferable that the oxidation phase comprise a mixed-conductivity substance having both the properties of electron conductivity and ion conductivity, or comprise a mixture of an electron-conducting substance and an ion-conducting substance. The electroconductive substances and the ion-conducting substances that can be used for the oxidation phase are not particularly restricted. Precious metals such as platinum, palladium and the like, and metal oxides such as nickel oxide, cobalt oxide, copper oxide, lanthanum manganite, lanthanum cobaltite, lanthanum chromite, and the like can be employed for the electroconductive substance. For example, zirconia stabilized with yttria or scandium oxide, ceria stabilized with gadolinium oxide or samarium oxide, or lanthanum gallate can be used as the ion-conducting substance.

The catalytic reaction section (oxygen partial pressure decreasing layer) comprises an oxidation catalyst for initiating a catalytic combustion reaction between, for example, the excess oxygen and combustible gas present in combustion exhaust gas. Precious metals and metal oxides can, for example, be employed as the oxidation catalyst, and there are no particular restrictions. Metal oxides having a perovskite structure such as lanthanum manganite and metal oxides having a pyrochlore structure possess high oxidation activity at high temperatures and are inexpensive compared to precious metals, and should therefore be preferably used as the oxidation catalyst. In addition, strontium-substituted lanthanum manganite has even higher oxidation activity, and is therefore even more preferable.

It is important for the chemical reactor of this invention thus configured that, for example, a contaminated combustion exhaust gas pass through the chemical reaction section after passing through the catalytic reaction section; that is, that the catalytic section be disposed in the upstream portion of the chemical reaction section with respect to the gas flow. In this case, forming the catalytic reaction section by covering the reduction phase that comprises the chemical reaction section with the oxidation catalyst phase is more preferable because the substances to be treated can be efficiently treated with a smaller amount of oxidation. It is also more preferable that the reduction phase that comprises the chemical reaction section be covered with an electrical insulating phase, and the catalytic reaction section be formed by covering the insulating phase with an oxidation catalyst phase, in order to prevent the catalytic reaction section from acting as a reduction phase. By this means, it is possible to securely prevent the oxidation catalyst phase from acting as a reduction phase.

Insulating substances such as alumina, silica, and glass can be used for forming the electrical insulating phase. It is preferable that the electrical insulating phase be porous to allow the substances to be treated passing through the catalytic reaction section to reach the reduction phase.

The oxidation catalyst may, for example, be in the form of powder or film. The catalytic reaction section can be configured by filling a vessel having a gas inlet/outlet with a powder. In addition, an item in which the oxidation catalyst powder is carried on a tubular or honeycombed carrier surface, and the oxidation catalyst is formed as a porous film on the carrier surface, can be employed as the catalytic reaction section. An arrangement in which the oxidation catalyst is configured as a porous film on the reduction phase constituting the chemical reaction section is particularly preferred for the catalytic reaction section. Since the number of catalytic reaction sites increases with an increase in the area of contact with the substances to be treated, it is preferable that the relative surface area of the oxidation catalyst phase be maximized and that the particles constituting the oxidation catalyst powder and the oxidation catalyst film be as fine as possible.

The present invention relates to a chemical reactor for carrying out chemical reactions such as decomposing and removing nitrogen oxides and other substances to be treated from oxygen-containing combustion exhaust gas, comprising a chemical reaction section in which the chemical reactions of the substances to be treated proceed, and a catalytic reaction section (oxygen partial pressure decreasing layer) for decreasing the oxygen concentration, wherein the catalytic reaction section is disposed in the upstream portion of the chemical reaction section. A particular feature of this chemical reactor is that the reduction phase constituting the chemical reaction section is covered by a porous oxidation catalyst film, and when a chemical reaction of the substances to be treated is carried out, the content of excess oxygen, which is an impediment to the chemical reaction, is reduced by utilizing the catalytic reaction, making it possible to ionize the coexisting oxygen and to reduce the flow that passes through the solid electrolyte of the chemical reactor. By this means, the amount of current required for the chemical reaction of the substances to be treated is reduced and the substances to be treated can be treated with high efficiency and low power consumption.

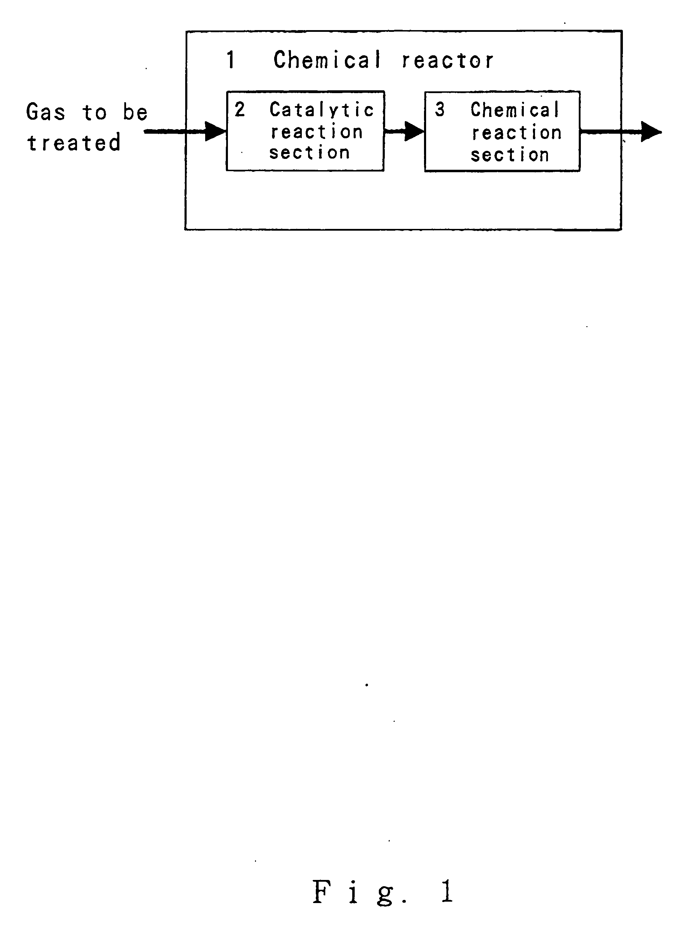

Next, an explanation will be given of the present invention based on the drawings. Fig. 1 is a structural drawing of the chemical reactor 1 related to an example of the present invention. The chemical reactor (electrochemical cell) comprises a catalytic reaction section 2 and a chemical reaction section 3, and the catalytic reaction section 2 is placed in the upstream portion of the chemical reaction section 3 with respect to the flow of the gas to be treated. In other words, the gas to be treated passes through the chemical reaction section 3 after passing through the catalytic reaction section 2.

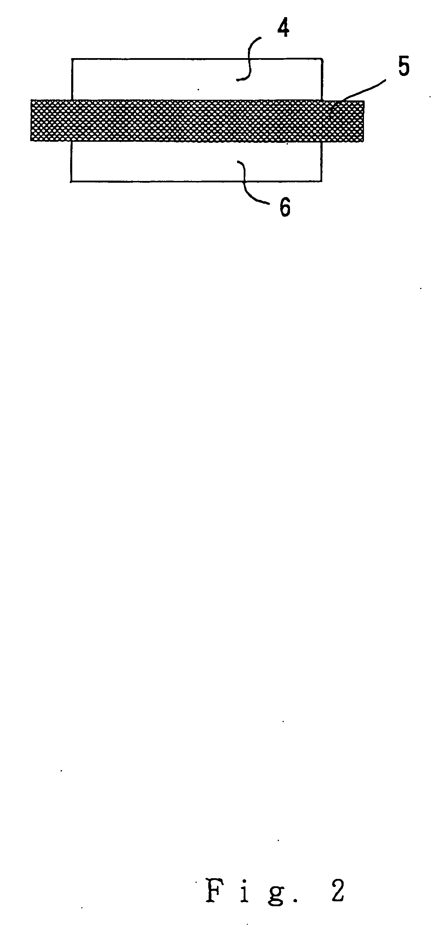

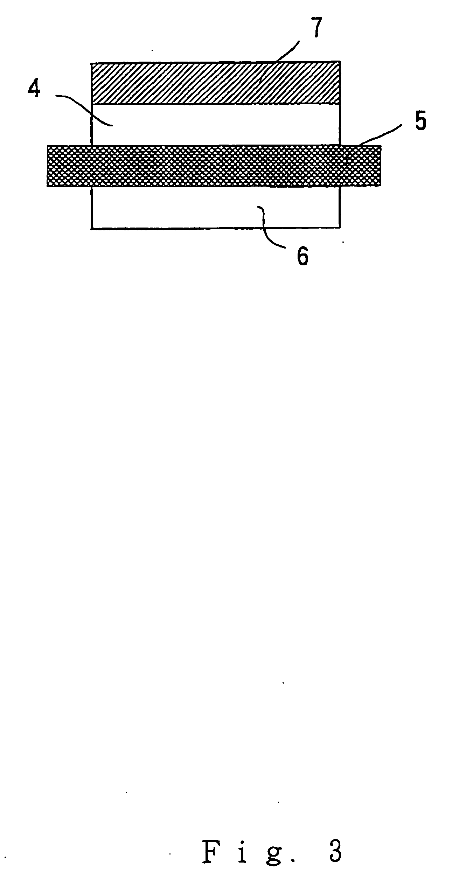

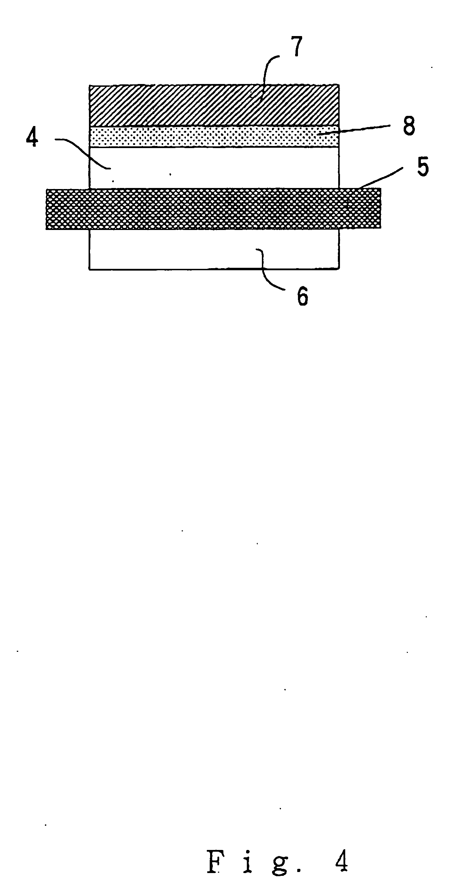

Fig. 2 shows a cross-sectional view of the structure of the chemical reaction section 3 related to the present invention. A reduction phase 4 is formed on one of the surfaces of an ion-conducting solid electrolyte 5, and an oxidation phase 6 is formed on the other surface. Fig. 3 shows the reduction phase 4 of the chemical reaction section 3 covered by the catalytic reaction section composed of an oxidation catalyst phase 7. Fig. 4 shows an electrical insulation phase 8 formed between the reduction phase 4 and the oxidation catalyst phase 7 of the chemical reaction section 3.

### Examples

Next, a concrete explanation of the present invention will be given with reference to a case in which nitrogen oxides are used as substances to be treated.

### Example 1

### (1) Fabrication of Chemical Reactor

Yttria-stabilized zirconia was employed as an ion-conducting phase composed of an ion-conducting solid electrolyte 5 constituting a chemical reaction section 3. The Yttria-stabilized zirconia was shaped as a disk with a diameter of 20 mm and a thickness of 0.5 mm. In addition, the reduction phase 4 constituting the chemical reaction section 3 had a two-layer structure that consisted of a platinum film and a film composed of a mixture of nickel oxide and yttria-stabilized zirconia. The platinum film was formed by a method in which one side of a solid electrolyte 5 was screen-printed to obtain a surface area of about 1.8 cm², and the product was heat-treated at 1200°C. The mixed film of nickel oxide and yttria-stabilized zirconia was formed by a method in which the platinum film was screen-printed to obtain the same surface area as the platinum film, and the product was heat-treated at 1450°C. The mixing ratio (molar ratio) of nickel oxide and yttria-stabilized zirconia was 6:4. The platinum film was subsequently screen-printed such that a surface area of about 1.8 cm² was obtained on the other surface of the solid electrolyte 5 on which the reduction phase had been formed, and the product was heat-treated at 1200°C, yielding an oxidation phase 6.

An La₁₋ₓSrₓMnO_{3-δ} powder (where x = 0.25) (referred to as "LSM" hereinbelow), which is a perovskite oxide, was used as the oxidation catalyst comprising the catalytic reaction section 2. A quartz tube was filled with the LSM powder, a catalytic reaction section was formed by disposing the tube in the upstream portion of the chemical reaction section 3, and a chemical reactor was fabricated. As is shown in Fig. 1, the gas introduced into the chemical reactor 1 for processing passes through the chemical reaction section 3 after passing through the catalytic reaction section 2.

### (2) Removal of Nitrogen Oxides

Nitrogen oxides were removed using the inventive chemical reactor formed in this manner. The treatment method is presented next. The chemical reactor 1 was placed in the gas to be treated, platinum wires were fixed as leads to the reduction phase 4 and oxidation phase 6, the system was connected to a DC power source, a DC voltage was applied, and a current was passed. The evaluation was carried out in the reaction temperature range of 500-600°C. A model combustion exhaust gas of helium balance having 1000 ppm nitrogen monoxide, 2% oxygen, and 0.3% hydrocarbons was passed at a flow rate of 50 ml/min as the gas to be treated. The concentration of nitrogen oxides in the gas to be treated was measured with a chemiluminescence NOx meter before and after the chemical reactor, and the nitrogen and oxygen concentrations were measured by gas chromatography. The removal rate of nitrogen oxides was derived from the reduction in nitrogen oxides, and the current density and power consumption were measured when the removal rate became 50%.

### (3) Results

The chemical reactor was heated to a reaction temperature of 600°C and the electricity was turned on to the chemical reaction section. The removal rate of nitrogen oxides increased together with the increase in the amount of the current at this time, and the content of nitrogen oxides decreased to about 50% when the current density was 43.9 mA/cm² and the power consumption was 87 mW. The oxygen concentration in the gas at the outlet of the chemical reactor at this time had been lowered to about 1%.

### Example 2

A chemical reactor was fabricated in the same manner as in Example 1 except that La₁₋ₓCeₓSn_{1-y}Mn_{y}O_{7-δ} (where x and y = 0.2) (referred to as "LCSM hereinbelow), which is a pyrochlore oxide, was used as the oxidation catalyst constituting the catalytic reaction section. The chemical reactor was heated to a reaction temperature of 600°C and the electricity was turned on to the chemical reaction section. The content of nitrogen oxides decreased this time to about 50% when the current density was 44.4 mA/cm² and the power consumption was 88 mW. The oxygen concentration in the gas at the outlet of the chemical reactor at this time had been lowered to about 1%.

### Example 3

The chemical reactor was prepared with the catalytic reaction section 2 made by forming an LCSM film as the oxidation catalyst phase 7 such that the film covered the surface of the reduction phase 4 of the chemical reaction section 3, which was prepared in the same manner as in Example 1. The cross-sectional structure of this chemical reactor is shown in Fig. 3. The chemical reactor was heated to a reaction temperature of 600°C and the electricity was turned on to the chemical reaction section. The content of nitrogen oxides decreased this time to about 50% when the current density was 44.7 mA/cm² and the power consumption was 97 mW.

### Example 4

An electrical insulation phase 8 composed of porous alumina was formed such that it covered the surface of the reduction phase 4 of the chemical reaction section 3, which was prepared in the same manner as in Example 1. In addition, the chemical reactor (electrochemical cell) was prepared with the catalytic reaction section 2 by forming an LSM film as the oxidation catalyst phase 7 such that the film covered the surface of the electrical insulation phase 8. The cross-sectional structure of this chemical reactor is shown in Fig. 4. The chemical reactor was heated to a reaction temperature of 600°c and the electricity was turned on to the chemical reaction section. The content of nitrogen oxides decreased this time to about 50% when the current density was 43.3 mA/cm² and the power consumption was 86 mW. When the results were evaluated at a reaction temperature of 550°C, it was found that the content nitrogen oxides had decreased to about 50% when the current density was 43.9 mA/cm² and the power consumption was 130 mW. The results were evaluated at a reaction temperature of 500°C, and it was found that the content of nitrogen oxides had decreased to about 50% when the current density was 45.0 mA/cm² and the power consumption was 220 mW.

### Example 5

A chemical reactor was fabricated in the same manner as in Example 4 except that the reduction phase 4 was a two-layer structure comprising a platinum film and a film composed of a mixture obtained by mixing nickel oxide and zirconia stabilized with scandium oxide in a molar ratio of 6:4. The chemical reactor was heated to a reaction temperature of 600°C and the electricity was turned on to the chemical reaction section. The content of nitrogen oxides decreased this time to about 50% when the current density was 45.0 mA/cm² and the power consumption was 89 mW.

### Example 6

A chemical reactor was fabricated in the same manner as in Example 4 except that zirconia stabilized with gadolinium oxide was used in the form of a disk with a diameter of 20 mm and a thickness of 0.5 mm as the solid electrolyte 5. The chemical reactor was heated to a reaction temperature of 600°C and the electricity was turned on to the chemical reaction section. The content of nitrogen oxides decreased this time to about 50% when the current density was 45.2 mA/cm² and the power consumption was 81 mW.

### Comparative Example 1

The chemical reaction section was prepared in the same manner as in Example 1, and this section was used as the chemical reactor without forming a catalytic reaction section. The electricity was turned on in the same manner as in Example 1. The content of nitrogen oxides decreased this time to about 50% when the current density was 94.4 mA/cm² and the power consumption was 310 mW. When the results were evaluated at a reaction temperature of 550°C, it was found that the content of nitrogen oxides had decreased to no more than around 25% at a power consumption of 300 mW.

As described in detail above, the present invention relates to a chemical reactor for carrying out chemical reactions of substances to be treated, such as nitrogen oxides or other substance in oxygen-containing combustion exhaust gases or the like, in the presence of excess oxygen, comprising a chemical reaction section in which the chemical reactions of the substances to be treated proceed, and a catalytic reaction section in which the oxygen concentration is reduced, wherein the catalytic reaction section is disposed in the upstream portion of the chemical reaction section, and the catalytic reaction is utilized to reduce the content of excess oxygen during the chemical reactions. The following kinds of advantageous results are achieved.
(1) It is possible to provide a chemical reactor (electrochemical cell) that can highly efficiently process substances to be treated even in the presence of excess oxygen, which impedes chemical reaction of the substances to be treated.
(2) Since a substance to be treated can be treated highly efficiently, the amount of current required is reduced when the substance to be treated is treated, making it possible to reduce the power consumption of the chemical reactor.
(3) It is possible to provide a new chemical reactor in which nitrogen oxides can be efficiently decomposed or otherwise removed to an environmentally acceptable level by electrochemical reactions in the combined presence of oxygen.
(4) The present invention allows the adsorption sites of gas molecules to be continuously activated in the combined presence of oxygen, so the chemical reactor of the present invention can be combined with other catalytic substances and used as a reactor for decomposing and hydrogen sulfide and other environmental pollutants.
(5) It is possible to provide a reactor capable of efficiently separating oxygen from mixed gases, or a highly efficient oxidation reactor for treating gases, liquids and solids by utilizing the activity of generated oxygen.

## Claims

1. A chemical reactor for carrying out chemical reactions of substances to be treated, which substances are present in an oxygen-containing gas, said chemical reactor comprising:
(i) a chemical reaction section in which the chemical reactions of the substances to be treated proceed, said chemical reaction section being composed of a reduction phase, an ion-conducting phase and an oxidation phase, wherein said reduction phase supplies electrons to the substances to be treated to thereby generate ions; said ion-conducting phase conducts the ions from the reduction phase; and said oxidation phase releases the electrons from the ions conducted by the ion-conducting phase; and
(ii) a catalytic reaction section in which the oxygen concentration in said gas is reduced, said catalytic reaction section comprising an oxidation catalyst and being disposed upstream of the chemical reaction section with respect to the direction of gas flow.

2. The chemical reactor according to claim 1, wherein the catalytic reaction section covers the surface of the reduction phase.

3. The chemical reactor according to claim 2,wherein a porous oxidation catalyst film covers the surface of the reduction phase.

4. The chemical reactor according to claim 2, wherein an electric insulating layer is disposed between the catalytic reaction section and the reduction phase.

5. The chemical reactor according to claim 1, wherein the substances to be treated are nitrogen oxides, whereby the nitrogen oxides are reduced in the reduction phase to generate oxygen ions, and the oxygen ions are conducted by the ion-conducting phase.

6. The chemical reactor according to claim 1, wherein said oxidation catalyst is for initiating a combustion reaction in the catalytic reaction section between oxygen and another combustible gas present in the oxygen-containing gas to thereby reduce the oxygen concentration in said gas.

## Patentansprüche

1. Chemischer Reaktor zum Ausführen chemischer Reaktionen von zu behandelnden Substanzen, wobei diese Substanzen in einem sauerstoffhaltigen Gas vorhanden sind, wobei der genannte chemische Reaktor folgendes umfasst:
(i) einen chemischen Reaktionsabschnitt, in dem die chemischen Reaktionen der zu behandelnden Substanzen fortschreiten, wobei der genannte chemische Reaktionsabschnitt aus einer Reduktionsphase, einer Ionenleitphase und einer Oxidationsphase besteht, wobei die genannte Reduktionsphase den zu behandelnden Substanzen Elektronen zuführt, um dadurch Ionen zu erzeugen; wobei die genannte Ionenleitphase die Ionen von der Reduktionsphase leitet; und wobei die genannte Oxidationsphase die Elektroden aus den durch die Ionenleitphase geleiteten Ionenleitphase freisetzt; und
(ii) einen katalytischen Reaktionsabschnitt, in dem die Sauerstoffkonzentration in dem genannten Gas reduziert ist, wobei der genannte katalytische Reaktionsabschnitt einen Oxidationskatalysator umfasst und oberhalb des chemischen Reaktionsabschnitts in Bezug auf die Richtung des Gasflusses angeordnet ist.

2. Chemischer Reaktor nach Anspruch 1, wobei der katalytische Reaktionsabschnitt die Oberfläche der Reduktionsphase abdeckt.

3. Chemischer Reaktor nach Anspruch 2, wobei ein poröser Oxidationskatalysatorfilm die Oberfläche der Reduktionsphase abdeckt.

4. Chemischer Reaktor nach Anspruch 2, wobei eine elektrische Isolationsschicht zwischen dem katalytischen Reaktionsabschnitt und der Reduktionsphase angeordnet ist.

5. Chemischer Reaktor nach Anspruch 1, wobei es sich bei den zu behandelnden Substanzen um Stickstoffoxid handelt, wobei die Stickstoffoxide in der Reduktionsphase reduziert werden, um Sauerstoffionen zu erzeugen, und wobei die Sauerstoffionen durch die Ionenleitphase geleitet werden.

6. Chemischer Reaktor nach Anspruch 1, wobei der genannte Oxidationskatalysator zum Einleiten einer Verbrennungsreaktion in dem katalytischen Reaktionsabschnitt zwischen Sauerstoff und einem anderen verbrennungsfähigen Gas dient, das in dem sauerstoffhaltigen Gas enthalten ist, um dadurch die Sauerstoffkonzentration in dem genannten Gas zu reduzieren.

## Revendications

1. Réacteur chimique pour effectuer des réactions chimiques de substances à traiter, lesquelles substances sont présentes dans un gaz contenant de l'oxygène, ledit réacteur chimique comprenant :
(i) une section de réaction chimique dans laquelle les réactions chimiques des substances à traiter passent, ladite section de réaction chimique étant composée d'une phase de réduction, d'une phase conductrice d'ions et d'une phase d'oxydation, dans lequel ladite phase de réduction fournit des électrons aux substances à traiter pour ainsi générer des ions ; ladite phase conductrice d'ions conduit les ions depuis la phase de réduction ; et ladite phase d'oxydation libère les électrons des ions conduits par la phase conductrice d'ions ; et
(ii) une section de réaction catalytique dans laquelle la concentration en oxygène dans ledit gaz est réduite, ladite section de réaction catalytique comprenant un catalyseur d'oxydation et étant disposée en amont de la section de réaction chimique par rapport au sens de l'écoulement du gaz.

2. Réacteur chimique selon la revendication 1, dans lequel la section de réaction catalytique recouvre la surface de la phase de réduction.

3. Réacteur chimique selon la revendication 2, dans lequel un film catalyseur d'oxydation poreux recouvre la surface de la phase de réduction.

4. Réacteur chimique selon la revendication 2, dans lequel une couche d'isolation électrique est disposée entre la section de réaction catalytique et la phase de réduction.

5. Réacteur chimique selon la revendication 1, dans lequel les substances à traiter sont des oxydes d'azote, moyennant quoi les oxydes d'azote sont réduits à la phase de réduction pour générer des ions d'oxygène et les ions d'oxygène sont conduits par la phase conductrice d'ions.

6. Réacteur chimique selon la revendication 1, dans lequel ledit catalyseur d'oxydation sert à initier une réaction de combustion dans la section de réaction catalytique entre l'oxygène et un autre gaz combustible présent dans le gaz contenant de l'oxygène pour ainsi réduire la concentration en oxygène dans ledit gaz.
